# EUROPÄISCHE PATENTANMELDUNG

(11) **EP 1 081 639 A2**
(43) Veröffentlichungstag der Anmeldung: **07.03.2001**
(21) Anmeldenummer: 00115940.9
(22) Anmeldetag: 25.07.2000
(51) Int. Cl.: G06K 19/04, G06K 19/06

(54) **Datenträger und Verfahren zu dessen Herstellung**

(30) Priorität: 31.08.1999 DE 19941362
(71) Anmelder: WINTER DRUCKERZEUGNISSE GmbH, 80689 München (DE)
(72) Erfinder: Albrecht, Michael, 82294 Oberschweinbach (DE); Wagner, Alfred, 95326 Kulmbach (DE); Winter, Lorenz, 82140 Olching (DE); Bernhard, Walter, 82194 Gröbenzell (DE)
(74) Vertreter: Niederkofler, Oswald A. Dipl.-Phys.

(57) **Zusammenfassung**

Die Erfindung schafft einen Datenträger (1) für visuell lesbare Daten mit einem kartenartigen Trägerelement (2), das wenigstens einen Datenbereich (12) aufweist, auf dem visuell lesbare Daten (15) aufgebracht sind, und bevorzugt eine auf dem oder jedem Datenbereich (12) angeordneten Abdeckung (13), z.B. in Form eines selbstklebenden Haftetikett mit einer Farbabdeckung, die - unter Beschädigung oder Zerstörung der Abdeckung - entfernbar ist. Bei der Herstellung wird eine Schutzfläche (3) und/oder das Trägerelement (2) derart geschwenkt, daß die Schutzfläche (3) eine Seitenfläche des Trägerelements (2) zumindest teilweise abdeckt.

## Beschreibung

Die Erfindung betrifft einen Datenträger für visuell lesbare Daten und ein Verfahren zu dessen Herstellung.

Datenträger in Form von Speicher- bzw. Chip- oder Prozessorkarten sind heutzutage weit verbreitet. Sie bieten einerseits ein Optimun an Mobilität und andererseits eine angemessene Informationskapazität bei geringem Platzbedarf - sozusagen im Taschenformat. Daneben stellen sie bedingt durch die meist sehr hohen Auflagen einen idealen Werbeträger dar.

Die bisher bekannten Karten, vorzugsweise Plastikkarten, zur Speicherung von Daten weisen geeignete Speichermittel auf, wie etwa Speicherchips oder Mikroprozessoren. Um den Umgang mit den gespeicherten Daten möglichst fälschungssicher zu gestalten, sind entsprechend aufwendige maschinelle Datenerkennungs- und/oder -verarbeitungssysteme erforderlich. Sind auf solchen Speicherkarten auch visuell lesbare Informationen mit abgedruckt, z.B. Gebrauchs-, Werbehinweise, etc., so sind diese im Gegensatz zu den maschinenlesbaren Daten für jedermann - auch für einen unberechtigten Besitzer der Karte - offen zugänglich. Sie können daher nicht Träger von "geheimen" visuell lesbaren Informationen, z.B. numerische Sicherheitscodes oder dergleichen, sein.

Vor allem bei Herausgebern und Anbietern von Plastikkarten besteht jedoch ein Bedürfnis, auch visuell lesbare "geheime" Informationen sicher gegen unberechtigten Zugriff geschützt auf einer Karte zu verwahren, um hierdurch Anwendungen zu ermöglichen, die auf die teure Infrastruktur der maschinellen Datenerkennung/Verarbeitung verzichten können, - sofern diese nicht aus anderen Gründen benötigt wird.

Bisher bekannte Anwendungen, bei denen visuell lesbare Daten vor dem offenen Zugang geschützt sind, nutzen in der Regel einfache Papierdatenträger, die in schwarz bedruckten Umhüllungen oder Umhüllungen mit "Stördrucken", wie z.B. dem "Zahlenmeer" bei PIN-Briefen für Mobilfunkkunden, EC-Karten, usw., in Verkehr gebracht werden. Die Nutzung solcher Datenträger mit vertraulichen visuell lesbaren Informationen ist an die Verwahrung in gut verschließenden und manipulationssicheren Umschlägen gebunden. In der Praxis kommen die verwendeten Umschläge diesen Anforderungen oft nicht nach, so daß das Inverkehrbringen dieser bekannten Papierdatenträger mit einem nicht unerheblichen Risiko verbunden ist.

Die Erfindung zielt darauf ab, einen visuell lesbaren Datenträger für besondere Sicherheitsansprüche, sowie ein Verfahren zu dessen Herstellung zur Verfügung zu stellen.

Die Erfindung erreicht dieses Ziel durch die Gegenstände der Ansprüche 1 und 16. Vorteilhafte Ausführungsbeispiele der Erfindung sind in den jeweils abhängigen Ansprüchen angegeben.

Danach schafft die Erfindung eine Datenträger für visuell lesbare Daten, mit: einem kartenartigen Trägerelement, das wenigstens einen Datenbereich aufweist, auf dem visuell lesbare Daten aufgebracht sind; und einer ersten Schutzfläche, die eine Seitenfläche des Trägerelements zumindest teilweise abdeckt, wobei die erste Schutzfläche über einen ersten Falz schwenkbar mit dem Trägerelement gekoppelt ist. Verfahrensmäßig erreicht die Erfindung das obengenannte Ziel dadurch, daß ein Verfahren zum Herstellen eines derartigen Datenträgers für visuell lesbaren Daten zur Verfügung gestellt wird.

Erfindungsgemäß ist der Datenträger gegen einen unberechtigten Zugriff auf die visuell lesbaren Daten geschützt. Ein solcher Schutz wird durch die die Seitenfläche des Trägerelements zumindest teilweise abdeckende Schutzfläche erreicht. Vorteilhaft deckt die Schutzfläche die gesamte Seitenfläche, oder den überwiegenden Teil der Seitenfläche ab. Besonders vorteilhaft ist hierbei, wenn die Schutzfläche eine Öffnung aufweist, die den Datenbereich und/oder die Abdeckung des Trägerelements zumindest teilweise freilegt, und ansonsten die Seitenfläche des Trägerelements vollständig abdeckt.

Als zusätzlicher Schutz gegen einen unberechtigten Zugriff ist der erfindungsgemäße Datenträger bevorzugt mit einer auf dem oder jedem Datenbereich angeordneten Abdeckung versehen, die nur unter Beschädigung oder Zerstörung der Abdeckung entfernbar ist. Damit sind die visuell lesbaren Informationen auf dem Datenträger durch einen gegen Manipulation geschützten Leseschutz abgedeckt, der nur sich selbst zerstörend die darunterliegenden Daten freigibt, d.h. nach dem Lesen der Daten nicht wiederherstellbar ist. Ein ggf. stattgefundener unberechtigter Zugriff auf die abgedeckten Daten kann demnach durch den berechtigten Inhaber des Datenträgers jederzeit festgestellt werden. Der erfindungsgemäße Datenträger ist als verläßlicher und gegen Manipulation geschützter Träger von visuell lesbaren Sicherheitsdaten für den öffentlichen Verkehr für bestimmte Anwendungen genauso vorteilhaft und vielfältig einsetzbar, wie es z.B. bekannte Chipkarten sind, - ohne jedoch ein aufwendiges Datenerkennungs- und Verarbeitungssystem zu benötigen.

Besonders bevorzugt sind die oben erwähnte Schutzfläche und das Trägerelement (zunächst) miteinander gekoppelt, insbesondere so, daß das Trägerelement schwenkbar gegenüber der Schutzfläche ist, oder umgekehrt. Besonders vorteilhaft ist es, wenn das Abdecken der Seitenfläche des Trägerelements durch die Schutzfläche durch das Schwenken der Schutzfläche und/oder des Trägerelements erreicht wird: Beispielsweise liegen das Trägerelement und die Schutzfläche zunächst nebeneinander in der selben Ebene. Nach dem Verschwenken der Schutzfläche bzw. des Trägerelements um 180° liegt dann die Schutzfläche direkt über dem Trägerelement, und überdeckt dessen Seitenfläche.

Zur schwenkbaren Kopplung kann eine Kante des Trägerelements mit einer Seitenfläche der Schutzfläche verbunden sein. Alternativ kann auch eine Kante der Schutzfläche mit der Seitenfläche des Trägerelements gekoppelt sein. Besonders vorteilhaft ist es, erfindungsgemäß die Kante der Seitenfläche mit der Kante des Trägerelements zu koppeln.

Die Kopplung kann besonders vorteilhaft dadurch erreicht werden, daß das Trägerelement und die Schutzfläche integral, d.h. einstückig ausgebildet sind. Das Trägerelement und die Schutzfläche sind hierbei bevorzugt aus dem selben Material hergestellt. Dies führt zu einer wesentlichen Senkung der Herstellkosten. Alternativ können das Trägerelement und die Schutzfläche auch auf andere Weise gekoppelt sein. Beispielsweise kann die Seitenfläche (bzw. ein Abschnitt der Seitenfläche) des Trägerelements auf der Seitenfläche der Schutzfläche aufgeklebt sein. Denkbar ist auch, die Schutzfläche über ein oder mehrere Verbindungselemente, z.B. ein oder mehrere Leimspuren, Klebebänder, etc. mit dem Trägerelement zu koppeln.

Die schwenkbare Kopplung zwischen dem Trägerelement (bzw. zwischen einem Abschnitt des Trägerelements) und der Schutzfläche (bzw. einem Abschnitt der Schutzfläche) kann besonders bevorzugt dadurch erreicht werden, daß am Trägerelement und/oder an der Schutzfläche und/oder zwischen dem Trägerelement und der Schutzfläche ein Falz vorgesehen ist. Das Schwenken der Schutzfläche und/oder des Trägerelements (bzw. der entsprechenden Trägerelement- und/oder Schutzflächenabschnitte) wird dann durch Falten bzw. Knicken entlang des Falzes erreicht. Besonders vorteilhaft liegt der Falz genau an der Grenze zwischen dem Trägerelement und der Schutzfläche. Dann ist das gesamte Trägerelement gegenüber der gesamten Schutzfläche schwenkbar.

Besonders bevorzugt ist die Schutzfläche abtrennbar mit dem Trägerelement verbunden. Dies wird vorteilhaft durch eine Solltrennstelle des Trägerelements, insbesondere eine Perforation, und/oder durch eine Solltrennstelle der Schutzfläche, insbesondere eine Perforation der Schutzfläche erreicht. Eine Solltrennstelle kann außer durch Perforieren auch z.B. durch eine - horizontal oder vertikale verlaufende - Materialverdünnung und/oder Materialaussparung beim Trägerelement und/oder bei der Schutzfläche erreicht werden. Bei der wie oben erwähnt alternativ möglichen Klebverbindung zwischen Trägerelement und Schutzfläche kann eine Solltrennstelle z.B. dadurch erreicht werden, daß ein leicht lösbarer Kleber, entsprechende Leimspuren bzw. leicht reißende Verbindungselemente (z.B. perforierte Klebebänder), etc. verwendet werden.

Besonders bevorzugt ist/sind die Trägerelementsolltrennstelle in der Seitenfläche des Trägerelements und/oder die Schutzflächensolltrennstelle in einer Seitenfläche der Schutzfläche vorgesehen. Vorteilhaft liegen dabei die Trägerelementsolltrennstelle und die Schutzflächensolltrennstelle direkt übereinander, und verlaufen besonders bevorzugt parallel zueinander. Jeder Abschnitt der Trägerelementsolltrennstelle grenzt dann unmittelbar an einen entsprechenden Schutzflächensolltrennstellenabschnitt an. Dadurch können auf einfache Weise sowohl die Trägerelementsolltrennstelle als auch die Schutzflächensolltrennstelle gleichzeitig gemeinsam aufgetrennt werden.

Aufbau und Abmessungen des kartenartigen Trägerelements und der Schutzfläche richten sich nach der gewünschten Anwendung des Datenträgers. Die Mobilität und Einsetzbarkeit - auch die Akzeptanz beim Endverbraucher - ist besonders dann groß, wenn das Trägerelement und/oder die Schutzfläche nach Art einer Kreditkarte ausgebildet ist/sind. Vorteilhaft ist die Länge des Trägerelements kleiner als 11 cm, besonders bevorzugt kleiner als 9 cm. Das Trägerelement hat insbesondere eine Breite von weniger als 9 cm, besonders bevorzugt weniger als 7 cm. Vorteilhaft entsprechen die Maße der Schutzfläche im wesentlichen denjenigen des Trägerelements, oder sind etwas größer.

Im Gegensatz zu herkömmlichen Kreditkarten ist das Trägerelement bevorzugt aus Papier, Pappe oder Karton ausgebildet. Alternativ kann das Trägerelement auch - wie eine herkömmliche Kreditkarte - aus Plastik (Kunststoff) bestehen. Die Schutzfläche ist bevorzugt ebenfalls aus Papier, Pappe oder Karton, und alternativ z.B. aus Kunststoff ausgebildet. Besonders vorteilhaft ist es, wenn die Schutzfläche und das Trägerelement aus dem gleichen Material bestehen.

Bei einer weiteren bevorzugten Variante ist auf dem Trägerelement des Datenträgers zusätzlich wenigstens ein Datenbereich vorgesehen, auf dem maschinenlesbare Daten, z.B. in Form von Magnetstreifen, Speicherchips oder Mikroprozessoren, vorhanden sind. Hiermit stellt die Erfindung einen Kombidatenträger sowohl für zugriffsgeschützte maschinenlesbare Daten als auch für zugriffsgeschützte visuell lesbare Daten zur Verfügung, wodurch neue Anwendungsbereiche für derartige Datenträger erschlossen werden, insbesondere als Kreditkarten- oder kreditkartenähnliche Ausführungen.

Als Leseschutz für die auf dem erfindungsgemäßen Datenträger gespeicherten visuell lesbare Daten werden verschiedene Abdeckungsvarianten vorgeschlagen:

Bei einer bevorzugten Variante ist die Abdeckung ein auf dem Datenbereich, auf dem die visuell lesbaren Daten aufgebracht sind, haftendes oder aufzusiegelndes Etikett, das nur unter Zerstörung oder Beschädigung des Etiketts, welches dabei zerreißt oder sich irreversibel deformiert, vom Datenbereich entfernbar ist, - mindestens in einem Ausmaß, um die dort vorhandenen visuell lesbaren Daten freizulegen. Dabei ist im einfachsten Fall das Etikett aus einem homogenen deckenden Material gefertigt. Bevorzugt ist das Etikett vorzugsweise aus einem durchsichtigen Material gefertigt und mit einer abrubbel-, abkratz- und/oder abziehbaren Deckschicht, insbesondere Farbschicht, beschichtet, so daß beim Entfernen der Deckschicht die darunterliegende Information nicht beschädigt wird. Alternativ dazu sind derartige Etiketten bevorzugt mit einer metallisierten Oberfläche, insbesondere eine Hologrammoberfläche, versehen, so daß sie sich ebenso lediglich "zerstörend", zumindest unter sichtbarer Beschädigung der Oberfläche, abziehen lassen, um mindestens die Fläche des visuell lesbaren Datenbereichs freizulegen.

Bei einer weiteren bevorzugten Variante der erfindungsgemäßen Abdeckung wird eine abrubbelbare Deckschicht unmittelbar auf dem visuell lesbaren Datenbereich des Trägers aufgetragen, besonders bevorzugt in Form einer abrubbel-, abkratz- und/oder abziehbaren Farb-, (heiß aufgesiegelten und/oder ausgehärteten) Klebe- oder metallischen Schicht. Diese Deckschichten können zusätzlich durch eine abziehbare transparente Folie abgedeckt sein.

All diesen Varianten ist gemeinsam, daß einerseits die Abdeckung durch den berechtigten Inhaber des Datenträgers einfach und schnell mittels Rubbeln, Kratzen oder Abziehen entfernt und die darunter liegenden Sicherheitsdaten freigelegt werden können; andererseits aber ein Unberechtigter nur durch sichtbare Beschädigung/Zerstörung der Originalabdeckung Zugang zu den Sicherheitsdaten erlangt.

Als weiteres Merkmal besonderer Sicherheit sind die zuvor beschriebenen Etiketten und/oder die Deckschichten selbst vorzugsweise zusätzlich mit Anstanzungen versehen, so daß die Etiketten und Deckschichten bei Ablöseversuchen sofort zerreißen bzw. sichtlich beschädigt werden. Der Sicherheitsstandard der Datenträger wird weiter dadurch erhöht, daß vorzugsweise die Etiketten an ihrer Oberfläche mit Stördrucken versehen sind. Diese sollen verhindern, daß die darunter liegenden visuell lesbaren "geheimen" Informationen anhand ihres Reliefs oder am Durchscheinen durch die Abdeckung erkennbar sind.

Nach Realisierung einer der beschriebenen Abdeckungsvarianten, verstärkt auch in deren Kombination, wird der erfindungsgemäße Datenträger auch einer Verwahrung geheimer Informationen höchsten Sicherheitsstandards gerecht. Es ist mit normalen Mitteln nahezu unmöglich die geheimen Informationen auf dem Datenträger sichtbar zu machen und nach der Einsichtnahme diesen Vorgang so rückgängig zu machen, daß dies nicht als Manipulation erkennbar wäre.

Der erfindungsgemäße Datenträger stellt daher eine einfach handzuhabende und besonders kostengünstige Lösung zur Verwahrung von Informationen dar, die einerseits im öffentlichen Verkehr zirkulieren und andererseits für den Berechtigten Inhaber ein schützenswertes Geheimnis darstellen. Dies können z.B. numerische Sicherheitscodes, Zugangscodes, etc. für verschiedenste Anwendungen sein. Diese können z.B. für Lose, Gewinnspiele, und ähnliches einsetzbar sein. Besonders vorteilhaft ist die Verwendung des erfindungsgemäßen Datenträgers als Werteinheitenträger, sog. "Prepaid-Card", "Value-Card" oder "Calling-Card", in Systemen der Telekommunikation. Dabei ist die mit Hilfe der erfindungsgemäßen Abdeckung vor unberechtigtem Zugriff geschützte visuell lesbare Information ein numerischer Code, der eine geldwerte Zugangsberechtigung für bei dem Kartenherausgeber, z.B. einem Mobilfunkprovider, verwaltete Telefoneinheiten bedeutet. Sowohl für den Kartenherausgeber, als auch für den Kartenkäufer bzw. Inhaber stellt ein kartenförmigen Werteinheitenträger eine organisatorisch besonders praktische und außerdem hohen Sicherheitsansprüchen gerecht werdende Lösung für den öffentlichen Umgang mit solchen Daten dar. Der hohe Sicherheitsstandard des erfindungsgemäßen Werteinheitenträgers ist im vorliegenden Anwendungsbereich umso bedeutender als der Mißbrauch auf der Grundlage des irgendwann "gelesenen" Sicherheitscodes möglich wäre, ohne den Werteinheitenträger tatsächlich zu besitzen. Besonders bevorzugt weist auch die Schutzfläche wenigstens einen Datenbereich auf, auf dem visuell lesbare Daten der oben genannten Art aufgebracht sind.

Vorteilhaft ist es, wenn erfindungsgemäß neben der Schutzfläche noch eine weitere Schutzfläche bereitgestellt wird, die die andere Seitenfläche des Trägerelements zumindest teilweise abdeckt - d.h. die Seitenfläche, die nicht (oder nicht vollständig) von der (ersten) Schutzfläche abgedeckt wird. Vorteilhaft deckt die weitere Schutzfläche die gesamte andere Seitenfläche, oder den überwiegenden Teil der anderen Seitenfläche des Trägerelements ab. Auch die weitere Schutzfläche kann eine Öffnung aufweisen, die das Trägerelement zumindest teilweise freilegt. Abgesehen hiervon deckt die weitere Seitenfläche das Trägerelement vorteilhaft vollständig ab.

Die weitere Schutzfläche ist vorteilhaft entsprechend der o.g. (ersten) Schutzfläche ausgestaltet, und mit dieser auf entsprechende Weise gekoppelt, wie oben unter bezug auf die Kopplung zwischen (erster) Schutzfläche und Trägerelement ausgeführt. Insbesondere ist die weitere Schutzfläche mit der (ersten) Schutzfläche so gekoppelt, daß diese gegeneinander schwenkbar sind. Besonders vorteilhaft ist es, wenn das Abdecken der anderen Seitenfläche des Trägerelements durch die weitere Schutzfläche durch das Schwenken der weiteren Schutzfläche erreicht wird: Beispielsweise liegen das Trägerelement, die (erste) Schutzfläche und die weitere Schutzfläche - in genau dieser Reihenfolge - zunächst hintereinander in der selben Ebene. Nach dem Verschwenken der (ersten) Schutzfläche bzw. des Trägerelements um 180° liegt dann, wie oben erläutert, das Trägerelement unter der (ersten) Schutzfläche. Danach kann die weitere Schutzfläche so gegenüber der (ersten) Schutzfläche - und damit auch gegenüber dem Trägerelement - um 180° verschwenkt werden, daß es die andere Seitenfläche des Trägerelements abdeckt (die weitere Schutzfläche liegt dann direkt unter dem Trägerelement).

Zum Ausbilden der schwenkbaren Kopplung zwischen der (ersten) Schutzfläche und der weiteren Schutzfläche kann eine Kante der weiteren Schutzfläche mit einer Seitenfläche der (ersten) Schutzfläche verbunden sein. Alternativ kann auch eine Kante der (ersten) Schutzfläche mit der Seitenfläche der weiteren Schutzfläche gekoppelt sein. Besonders vorteilhaft ist es, erfindungsgemäß die Kante der Schutzfläche mit der Kante der weiteren Schutzfläche zu koppeln.

Die Kopplung kann vorteilhaft dadurch erreicht werden, daß die weitere Schutzfläche und die (erste) Schutzfläche integral, d.h. einstückig ausgebildet sind. Diese sind hierbei bevorzugt aus dem selben Material hergestellt. Dies führt zu einer weiteren Verringerung der Herstellkosten. Alternativ können die (erste) Schutzfläche und die weitere Schutzfläche auch auf andere Weise gekoppelt sein. Beispielsweise kann die Seitenfläche, oder ein Abschnitt der Seitenfläche der weiteren Schutzfläche auf der Seitenfläche der (ersten) Schutzfläche aufgeklebt sein. Denkbar ist auch, die weitere Schutzfläche über ein oder mehrere Verbindungselemente, z.B. ein oder mehrere Leimspuren, Klebebänder, etc. mit der (ersten) Schutzfläche zu koppeln.

Die schwenkbare Kopplung zwischen der ersten Schutzfläche (bzw. zwischen einem Abschnitt der ersten Schutzfläche) und der weiteren Schutzfläche (bzw. einem Abschnitt der weiteren Schutzfläche) kann auch dadurch erreicht werden, daß an der (ersten) Schutzfläche und/oder an der weiteren Schutzfläche und/oder zwischen der (ersten) Schutzfläche und der weiteren Schutzfläche ein Falz vorgesehen ist. Das Schwenken der (ersten) Schutzfläche und/oder der weiteren Schutzfläche (bzw. der entsprechenden Schutzflächenabschnitte) wird dann durch Falten bzw. Knicken entlang des Falzes erreicht. Besonders vorteilhaft liegt der Falz genau an der Grenze zwischen der (ersten) Schutzfläche und der weiteren Schutzfläche. Dann ist die gesamte (erste) Schutzfläche gegenüber der gesamten weiteren Schutzfläche schwenkbar.

Nach dem oben beschriebenem Schwenken der (ersten) Schutzfläche gegenüber dem Trägerelement um 180°, und dem darauffolgenden Schwenken der weiteren Schutzfläche gegenüber der (ersten) Schutzfläche und dem Trägerelement um 180° wird dann bevorzugt die weitere Schutzfläche abtrennbar mit dem Trägerelement und/oder alternativ mit der (ersten) Schutzfläche verbunden. Die (erste) Schutzfläche und die weitere Schutzfläche bilden darin eine das Trägerelement umgebende Schutzhülle. Diese kann die auf dem Trägerelement befindlichen visuellen Daten - abgesehen von den durch die Öffnungen der Schutzflächen freigelegten Daten - abdecken, d.h. von außen "unsichtbar" machen. Ebenso können auch die auf den Schutzflächen befindlichen visuellen Daten im Inneren der von ihnen gebildeten Schutzhülle liegen, und damit nicht mehr offen zugänglich sein.

Zum Abtrennen der weiteren Schutzfläche von dem Trägerelement, und/oder von der (ersten) Schutzfläche dient vorzugsweise die Trägerelementsolltrennstelle und/oder eine weitere Trägerelementsolltrennstelle und/oder eine Solltrennstelle der weiteren Schutzfläche und/oder die Schutzflächensolltrennstelle. Eine Solltrennstelle ist hierbei bevorzugt als Perforation ausgeführt. Eine Sollbruchstelle kann auch z.B. eine - horizontal oder vertikale verlaufende - Materialverdünnung und/oder Materialaussparung sein.

Besonders bevorzugt ist die Solltrennstelle der weiteren Schutzfläche in einer Seitenfläche der weiteren Schutzfläche, und/oder die weitere Trägerelementsolltrennstelle in einer Seitenfläche des Trägerelements vorgesehen. Vorteilhaft liegen die weitere Trägerelementsolltrennstelle und/oder die Trägerlementsolltrennstelle und/oder die Solltrennstelle der weiteren Schutzfläche übereinander, und verlaufen dabei besonders bevorzugt parallel zueinander.

Aufbau und Abmessungen der weiteren Schutzfläche entsprechen im wesentlichen derjenigen der (ersten) Schutzfläche. Vorteilhaft entsprechen die Maße der weiteren Schutzfläche auch im wesentlichen denjenigen des Trägerelements, oder sind etwas größer. Die weitere Schutzfläche besteht bevorzugt aus Papier, Pappe oder Karton, und kann alternativ z.B. aus Kunststoff ausgebildet sein. Besonders vorteilhaft ist es, wenn die weitere Schutzfläche aus dem gleichen Material besteht wie die (erste) Schutzfläche und/oder wie das Trägerelement.

Gemäß der vorliegenden Erfindung werden beim Herstellen des Datenträgers bevorzugt das Trägerelement, die (erste) Schutzfläche und die weitere Schutzfläche über einen Endlosträger, insbesondere einen Papier-Endlosträger, bereitgestellt. Dabei liegt vorzugsweise das Trägerelement eines ersten zu fertigenden Datenträgers neben der (ersten) Schutzfläche dieses Datenträgers, die neben dessen weiterer Schutzfläche liegt. Diese weitere Schutzfläche des ersten Datenträgers liegt neben dem Trägerelement eines zweiten zu fertigenden Datenträgers, das neben dessen (erster) Schutzfläche liegt, die wiederum neben der weiteren Schutzfläche des zweiten Datenelements liegt, usw. Dadurch ist es möglich, die Herstellkosten für die Datenträger weiter zu senken, und die Herstellgeschwindikeit zu erhöhen.

Zudem läßt die o.g. einfache Bauweise eines einzelnen Datenträgers zu, daß für das Auftragen der visuell lesbaren Sicherheitsdaten im Datenbereich des Trägerelements (sog. Personalisierung bzw. Kodierung des Datenträgers) verschiedene Technolgien anwendbar sind. Bevorzugt werden hierfür verwendet: Thermotransferdruck, Laserdruck, Inkjet oder Laserengraving, wobei die Sicherheitsdaten nach dem Prozeß der Personalisierung, wie zuvor beschrieben, abgedeckt werden.

Bekanntlich gehört zu einem Vertrieb von kartenförmigen Datenträgern auch die Anfertigung von Anschreiben, deren Personalisierung und der Datentabgleich zwischen Karte und Anschreiben. Das vorliegende Verfahren ermöglicht es auf rationelle Art, daß mit dem Endlosträger angrenzende organisatorische Aufgaben in einem Arbeitsgang mit der Bearbeitung des Datenträgers selbst erledigt werden können. Dies betrifft insbesondere das "gleichzeitige" Erzeugen von Informationsträgern, wie Anschreiben für den Empfänger des Datenträgers, Werbe- oder Gebrauchshinweise oder Balkencode-Labels, aber auch das Erzeugen eines Umschlages für das Anschreiben einschl. aufgeklebtem Datenträger.

Weitere Vorteile und Ausgestaltungen der Erfindung ergeben sich aus der nachfolgenden Beschreibung bevorzugter Ausführungsbeispiele. In der Beschreibung wird auf die beigefügte schematische Zeichnung Bezug genommen. In der Zeichnung zeigen:
- Fig. 1: eine Draufsicht auf einen erfindungsgemäßen Datenträger mit einem Trägerelement, einer Schutzfläche und einer weiteren Schutzfläche vor dem Zusammenfalten und Verkleben;
- Fig. 2: eine Draufsicht auf einen Datenträger gemäß Fig. 1 nach dem Falten und Verkleben, wobei die weitere Schutzfläche des Datenträgers nach oben zeigt;
- Fig. 3: eine Querschnittansicht des in Fig. 2 gezeigten Datenträgers;
- Fig. 4: eine Draufsicht auf das Trägerelement nach Entfernen der Schutzflächen; und
- Fig. 5: eine Draufsicht auf einen erfindungsgemäßen Datenträger gemäß einem weiteren bevorzugten Ausführungsbeispiel.

Die nachfolgend beschriebenen Ausführungsbeispiele betreffen einen als Werteinheitenträger eingesetzten Datenträger im Kreditkartenformat für visuell lesbare Sicherheitsdaten, welche eine numerisch kodierte Werteinheit darstellen, - nachfolgend "Wertkarte" genannt. Der Einfachheit halber sind in den Figuren die gleichen oder entsprechende Merkmale mit denselben Bezugszeichen gekennzeichnet.

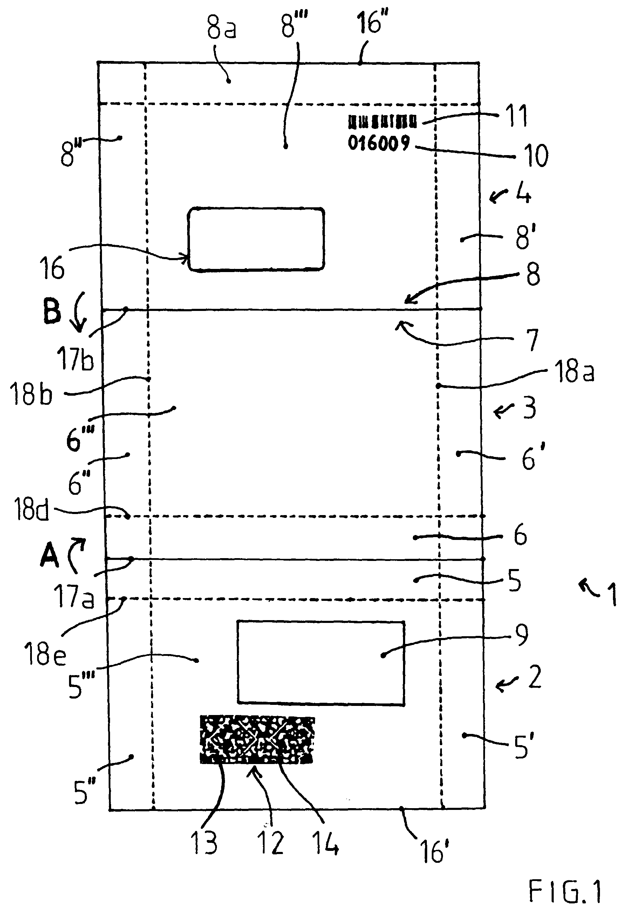

Die Figur 1 zeigt eine Draufsicht auf eine Vorderseite einer solchen Wertkarte 1 vor dem Zusammenfalten und Verkleben. Die Wertkarte 1 ist aus Papier, Pappe oder Karton gefertigt. Sie besteht aus einem Trägerelement 2, einer Schutzfläche 3 und einer weiteren Schutzfläche 4. Das Trägerelement 2, die Schutzfläche 3 und die weitere Schutzfläche 4 sind integral ausgebildet, und jeweils ca. 7-8 cm breit, und 11-12 cm lang. Die Schutzfläche 3 und die weitere Schutzfläche 4 sind gleich breit, und etwas breiter als das Trägerelement 2. Ein oberer Endabschnitt 5 des Trägerelements 2 grenzt an einen unteren Endabschnitt 6 der Schutzfläche 3. Ebenso grenzt ein oberer Endabschnitt 7 der Schutzfläche 3 an einen unteren Endabschnitt 8 der weiteren Schutzfläche 4. Wie in der Figur 1 durch einen Abschnitt 9 angedeutet, ist die Vorderseite des Trägerelements 2 mit visuell lesbaren Werbe- und Informationshinweisen, z.B. Gebrauchshinweisen bedruckt. Auf vergleichbare Weise ist die Vorderseite der weiteren Schutzfläche 4 mit visuell lesbaren Werbe- und Informationshinweisen, hier einer (ungeschützten) offenen Seriennummer 10 zusammen mit einem Barcode-Balken 11, versehen. Derartige Informations- und Werbehinweise sind bei alternativen Ausführungsbeispielen (nicht dargestellt) alternativ oder zusätzlich auch an der Rückseite des Trägerelements 2 und/oder der Schutzfläche 3 und/oder der weiteren Schutzfläche 4 aufgedruckt. Bei einer hochwertigen Version der vorliegenden Wertkarte wird nach dem Bedrucken die Wertkarte 1 durch eine transparente Folie abgedeckt, so daß die bedruckten Werbe- und/oder Informationshinweise gegen Abrieb und Manipulation geschützt sind.

Auf der Vorderseite weist das Trägerelement 2 der Wertkarte 1 bei einem Bereich links unten einen Abschnitt bzw. einen Datenbereich 12 für visuell lesbare Sicherheitsdaten auf. Der Datenbereich 12 ist mit einem rechteckigen, länglichen Haftetikett 13 abgedeckt. Vor der Abdeckung werden die o.g. Sicherheitsdaten in dem Datentbereich 12 aufgebracht, z.B. im Thermotransferdruck-, Laserdruck-, Ink-Jet- oder Laserengravingverfahren. Nach diesem Vorgang, der sog. Personalisierung der Wertkarte 1, wird der Datenbereich 12 mit dem selbstklebenden Haftetikett 13 abgedeckt.

Das in Fig. 1 dargestellte Haftetikett 13 besteht aus einer transparenten Trägerfolie mit aushärtbarer Klebeschicht, die mit einer (undurchsichtigen) abrubbelbaren silbrigen Farbschicht beschichtet ist. Die Farbschicht ist ferner mit einem sog. "Stördruck" bedruckt, d.h. mit unregelmäßig schwarzen Abschnitten, so daß die Oberfläche des Haftetiketts 13 eine unregelmäßige schwarz-graue Schattierung aufweist. Die Trägerfolie des Haftetiketts 13 ist außerdem mit mehreren pfeilförmigen Anstanzungen 14 versehen, die längs der Trägerfolie mit wechselnder Orientierung aneinandergereiht sind (in Fig. 1 als dünne helle Linien erkennbar).

Diese Ausgestaltung des Haftetiketts 13 macht eine Manipulation, d.h. ein unberechtigtes Lesen der Sicherheitsdaten nahezu unmöglich, ohne daß die Manipulation nicht feststellbar bliebe. Die Sicherheitsdaten können lediglich freigelegt werden, indem die Farbschicht vom Haftetikett 13 und die Trägerfolie des Haftetiketts 13 wenigstens teilweise abgekratzt oder abgerubbelt werden. In beiden Fällen wird die Abdeckung des Datenbereichs 12 sichtbar beschädigt bzw. zerstört. Die einmal abgerubbelte Farbschicht ist mit einfachen Mitteln nicht wiederherstellbar. Auch ein Abziehen des Haftetiketts führt aufgrund der Anstanzungen 14 zu einem Zerreißen der Trägerfolie selbst, was bei einem Versuch der Wiederherstellung der Abdeckung auf jeden Fall sichtbar bleibt. Als weiteres Sicherheitsmerkmal verhindert der "Stördruck" auf dem Haftetikett 13, daß die darunterliegenden Sicherheitsdaten bei aufgeklebtem Haftetikett 13 durchscheinen oder anhand ihres Reliefs, das sich gegebenenfalls auf der Oberfläche des Haftetiketts 13 abbildet, erkennbar sind.

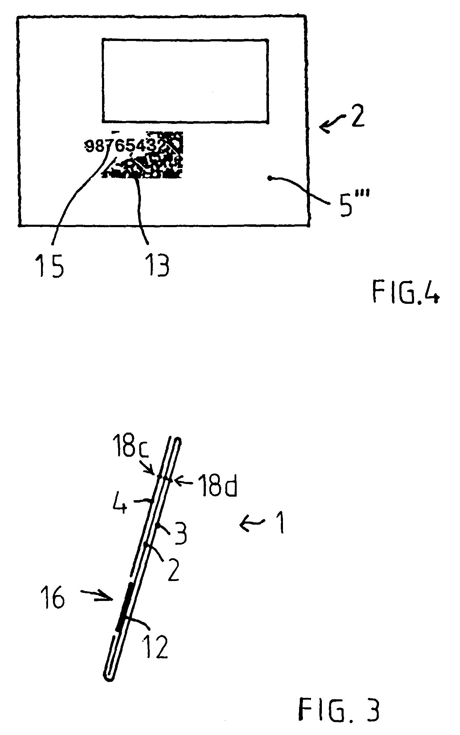

Anhand von Fig. 4 wird dies nochmals veranschaulicht. Dort ist das Trägerelement 2 nach dem Abtrennen des in Fig. 1 dargestellten oberen Endabschnitts 5 mitsamt der Schutzfläche 3 und der weiteren Schutzfläche 4, und nach dem Abtrennen eines rechten Endabschnitts 5' sowie eines linken Endabschnitts 5'' des Trägerelements 2 dargestellt. Fig. 4 zeigt das Trägerelement 2 mit teilweise freigelegten Sicherheitsdaten, hier ein Zahlencode 15. Die Trägerfolie des Haftetiketts 13 ist dort von links teilweise abgerubbelt; außerdem ist auch die Farbschicht auf der Trägerfolie des Haftetiketts 13 teilweise abgerubbelt. Der Zahlencode 15 ist nunmehr (teilweise) erkennbar - bei gleichzeitig sichtbarer und irreversibler Zerstörung der Originalabdeckung.

Wieder bezogen auf Fig. 1 weist die Vorderseite der weiteren Schutzfläche 4 der Wertkarte 1 bei einem Bereich links unten eine Ausstanzung 16 auf. Die Ausstanzung 16 befindet sich an einer Stelle, die bei dem Trägerelement 2 der Stelle entspricht, bei der der Datenbereich 12 vorgesehen ist. Die Ausstanzung 16 hat eine dem Datenbereich 12 entsprechende Form, bzw. ist etwas größer.

Nach einer bevorzugten Herstellungsverfahrensvariante werden mehrere Wertkarten der oben beschriebenen Art miteinander auf einem mehrfach genutzten Papier-Endlosträger verarbeitet. Der Papier-Endlosträger hat eine Breite, die der Breite der in Fig. 1 dargestellten Wertkarte 1 entspricht (bzw. der Länge des Trägerelements 2, der Schutzfläche 3 und der weiteren Schutzfläche 4). Zunächst werden auf den Papier-Endlosträger visuell lesbare Werbehinweise und Informationshinweise wie Barkodes, Seriennummern, etc. aufgedruckt. In einem nächsten Schritt werden die Sicherheitsdaten in dem Datenbereich 12 des Trägerelements 2 gemäß dem oben beschriebenen Verfahren aufgebracht, und dann wie oben erläutert der Datenbereich 12 mit dem selbstklebenden Haftetikett 13 abgedeckt. Als nächstes werden in regelmäßigen Abständen Ausstanzungen 16 der oben genannten Art aus dem Papier-Endlosträger herausgestanzt. Zum späteren Schutz des Datenbereichs 12 kann dann eine transparente Folie an der Unterseite der weiteren Schutzfläche 4 unter der Ausstanzung 16 angebracht werden (nicht dargestellt). Diese verhindert, daß nach der Herstellung durch die Ausstanzung 16 hindurch die Trägerfolie des Haftetiketts 13 zusammen mit der Farbschicht auf der Trägerfolie des Haftetiketts 13 abgerubbelt werden können.

Der Weitertransport des Papier-Endlosträgers während der verschiedenen Herstellschritte kann z.B. mittels zweier seitlich angeordneter Führungslochränder erreicht werden, die später abgeschnitten werden.

Schließlich wird die Wertkarte 1 durch Durchtrennen des Papier-Endlosträgers entlang einer unteren Schnittstelle 16' und einer oberer Schnittstelle 16'' aus dem Papier-Endlosträger herausgeschnitten, und so von weiteren zu fertigenden Wertkarten abgetrennt.

Daraufhin wird an der Unterseite des Trägerelements 2 im Bereich dessen rechten Endabschnitts 5' und dessen linken Endabschnitts 5'', und/oder an der Unterseite der Schutzfläche 3, und zwar im Bereich eines rechten Endabschnitts 6' der Schutzfläche 3 und eines linken Endabschnitts 6'' der Schutzfläche 3 ein Klebstoff aufgebracht. Dann wird gemäß einem Pfeil A das Trägerelement 2 entlang eines unteren Falzes 17a zwischen dem oberen Endabschnitt 5 des Trägerelements 2 und dem unteren Endabschnitt 6 der Schutzfläche 3 - in Fig. 1 nach unten hin - gefaltet, bis die Unterseite des rechten Endabschnitts 5' des Trägerelements 2 die Unterseite des rechten Endabschnitts 6' der Schutzfläche 3, und die Unterseite des linken Endabschnitts 5'' des Trägerelements 2 die Unterseite des linken Endabschnitts 6'' der Schutzfläche 3 berührt. Dadurch wird gleichzeitig ein Verkleben der Unterseite des rechten Endabschnitts 5' des Trägerelements 2 und der Unterseite des rechten Endabschnitts 6' der Schutzfläche 3, sowie der Unterseite des linken Endabschnitts 5'' des Trägerelements 2 und der Unterseite des linken Endabschnitts 6'' der Schutzfläche 3 erreicht.

Als nächstes wird an der Unterseite der weiteren Schutzfläche 4, und zwar im Bereich eines oberen Endabschnitts 8a der weiteren Schutzfläche 4, und/oder an der jetzt nach unten gerichteten Vorderseite des Trägerelements 2, im Bereich dessen oberen Endabschnitts 5 ein Klebstoff aufgebracht. Zusätzlich wird auch ein Klebstoff an der Unterseite der weiteren Schutzfläche 4, und zwar im Bereich eines rechten Endabschnitts 8' der weiteren Schutzfläche 4 und eines linken Endabschnitts 8'' der weiteren Schutzfläche 4 aufgebracht, und/oder an der jetzt nach unten gerichteten Vorderseite des Trägerelements 2 im Bereich dessen rechten Endabschnitts 5' und dessen linken Endabschnitts 5''. Hierauf wird gemäß einem Pfeil B die weitere Schutzfläche 4 entlang eines oberen Falzes 17b zwischen dem oberen Endabschnitt 7 der Schutzfläche 3 und dem unteren Endabschnitt 8 der weiteren Schutzfläche 4 - in Fig. 1 nach unten hin - gefaltet. Dadurch berührt schließlich die jetzt nach unten gerichtete Vorderseite des rechten Endabschnitts 5' des Trägerelements 2 die Unterseite des rechten Endabschnitts 8' der weiteren Schutzfläche 4, und die jetzt nach unten gerichtete Vorderseite des linken Endabschnitts 5'' des Trägerelements 2 die Unterseite des linken Endabschnitts 8'' der weiteren Schutzfläche 4. Außerdem berührt die Vorderseite des oberen Endabschnitts 5 des Trägerelements 2 die Unterseite des oberen Endabschnitts 8a der weiteren Schutzfläche 4. Infolgedessen werden gleichzeitig die jetzt nach unten gerichtete Vorderseite des rechten Endabschnitts 5' des Trägerelements 2 und die Unterseite des rechten Endabschnitts 8' der weiteren Schutzfläche 4, die jetzt nach unten gerichtete Vorderseite des linken Endabschnitts 5'' des Trägerelements 2 und die Unterseite des linken Endabschnitts 8'' der weiteren Schutzfläche 4, sowie die jetzt nach unten gerichtete Vorderseite des oberen Endabschnitts 5 des Trägerelements 2 und die Unterseite des oberen Endabschnitts 8a der weiteren Schutzfläche 4 verklebt. Dadurch bilden die Schutzfläche 3 und die weitere Schutzfläche 4 für das Trägerelement 2 einen Schutzumschlag aus.

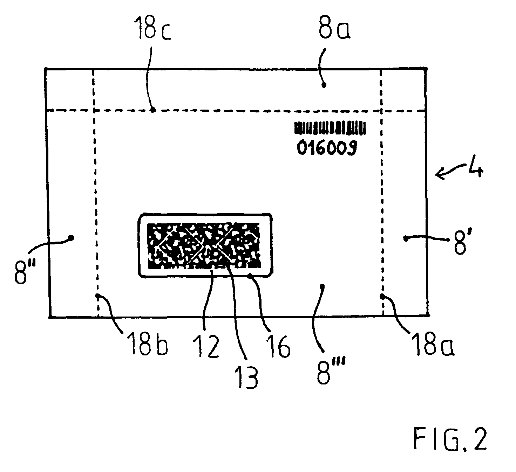

Bei der Darstellung gem. Fig. 2 ist die sich nach diesem Falten und Verkleben ergebende Trägerelement-Schutzumschlagkombination so gedreht, daß die weitere Schutzfläche 4 nach oben zeigt. Die Trägerelement-Schutzumschlagkombination wird dann wie folgt perforiert: Eine erste, rechte Perforation 18a wird zwischen einem Mittelabschnitt 8''' der weiteren Schutzfläche 4, und deren rechtem Endabschnitt 8' ausgestanzt. Ebenso wird eine zweite, linke Perforation 18b zwischen dem Mittelabschnitt 8''' und dem linken Endabschnitt 8'' der weiteren Schutzfläche 4, und eine obere, dritte Perforation 18c wird zwischen dem Mittelabschnitt 8''' und dem oberen Endabschnitt 8a der weiteren Schutzfläche 4 ausgestanzt. Beim Ausstanzen der Perforationen der weiteren Schutzfläche 4 werden gleichzeitig entsprechenden Stellen des jetzt unter der weiteren Schutzfläche 4 liegenden Trägerelements 2, und der jetzt unter diesem liegenden Schutzfläche 3 ausgestanzt. Damit ergeben sich bei dem Trägerelement 2, und der Schutzfläche 3 Perforationen, die denjenigen der weiteren Schutzfläche 4 entsprechen.

Gem. Fig. 1 ergeben sich also - dargestellt für den Fall, daß die Klebeverbindungen wieder getrennt, und die Wertkarte 1 wieder auseinandergefaltet würde - eine der dritten Perforation 18c entsprechende vierte Perforation 18d zwischen einem Mittelabschnitt 6''' und dem unteren Endabschnitt 6 der Schutzfläche 3, und eine fünfte Perforation 18e zwischen einem Mittelabschnitt 5''' des Trägerelements 2 und dessen oberem Endabschnitt 5. Auch erstreckt sich die erste, rechte Perforation 18a von der weiteren Schutzfläche 4 aus weiter zur Schutzfläche 3, und liegt dort zwischen dem Mittelabschnitt 6''' der Schutzfläche 3, und deren rechtem Endabschnitt 6'. Von dort aus erstreckt sich die erste, rechte Perforation 18a weiter zum Trägerelement 2, und ist dort zwischen dem Mittelabschnitt 5''' des Trägerelements 2 , und dessen rechtem Endabschnitt 5' ausgebildet. Auf vergleichbare Weise erstreckt sich die zweite, linke Perforation 18b von der weiteren Schutzfläche 4 aus weiter zur Schutzfläche 3, und liegt dort zwischen dem Mittelabschnitt 6''', und dem linkem Endabschnitt 6''. Von dort aus erstreckt sich die zweite, linke Perforation 18b weiter zum Trägerelement 2, und ist dort zwischen dem Mittelabschnitt 5''', und dem linken Endabschnitt 5'' ausgebildet.

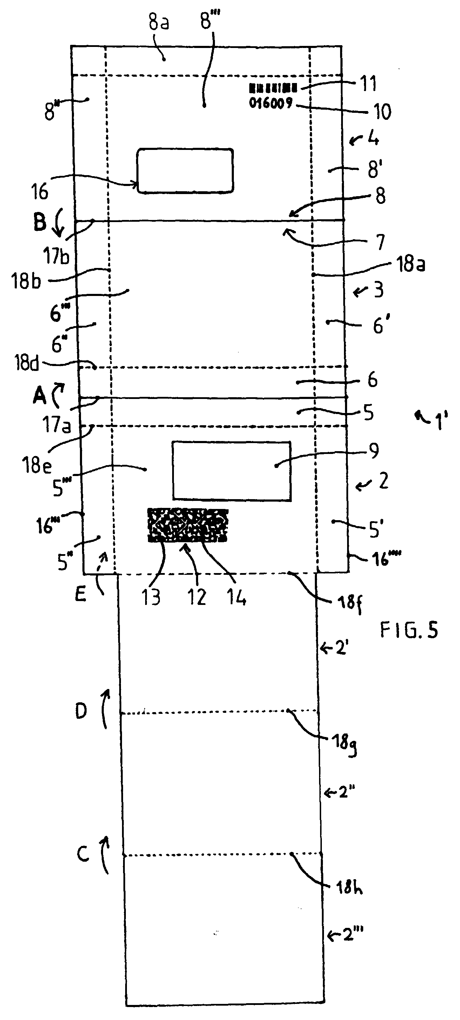

Bei einem alternativen Hersteilverfahren können alternativ die o.g. Perforationen 18a, 18b, 18c, 18d und 18e bereits vor dem Falten und Verkleben der Wertkarte 1 angebracht werden, und zwar gleichzeitig mit, unmittelbar vor, oder kurz nach dem o.g. Bedrucken der Wertkarte 1 bzw. dem Aufbringen des Haftetiketts 13. Auch werden bei dem alternativen Hersteilverfahren gleichzeitig die Sicherheitsdaten in dem Datenbereich 12, die Seriennummer 11, und der Barcode-Balken 11 aufgedruckt. Dabei kann anstelle der in Fig. 1 dargestellten Wertkarte 1 auch die in Fig. 5 gezeigte Wertkarte 1' verwendet werden. Diese entspricht in Aufbau und Abmessung der oben in bezug auf die Fig. 1 - 4 gezeigten Wertkarte 1. Allerdings grenzt ein unterer Endabschnitt des Mittelabschnitts 5''' des Trägerelements 2 an eine zusätzliche, erste Informationsfläche 2'. Diese grenzt an eine zweite Informationsfläche 2'', die wiederum an eine dritte Informationsfläche 2''' angrenzt. Auf die Informationsflächen 2', 2'' und 2''' sind z.B. zusätzliche Werbe- und Informationshinweise der o.g. Art aufgedruckt. Die erste Informationsfläche 2' und das Trägerelement 2 sind integral ausgebildet, ebenso auch die drei Informationsflächen 2', 2'' und 2'''. Die Länge und die Breite des Mittelabschnitts 5''' des Trägerelements 2 entsprechen derjenigen der Informationsflächen 2', 2'' und 2''', bzw. sind etwas größer. Zwischen dem Trägerelement 2 und der ersten Informationsfläche 2'' (und/oder zwischen entsprechenden aufeinanderfolgenden Informationsflächen 2', 2'' und 2'') sind Perforationen 18f, 18g, 18h angebracht.

Im Unterschied zur o.g. Wertkarte 1 gem. den Fig. 1 - 4 liegen bei der in Fig. 5 dargestellten alternativen Wertkarte 1' beim Papier-Endlosträger einzelne Wertkarten seitlich nebeneinander. Damit kann durch Durchtrennen des Papier-Endlosträgers entlang einer linken Schnittstelle 16''' und einer rechten Schnittstelle 16'''' die Wertkarte 1' aus dem Papier-Endlosträger herausgeschnitten, und so von weiteren zu fertigenden Wertkarten abgetrennt werden. Daraufhin werden die Informationsflächen 2', 2'', 2'' so gestanzt, daß sie die o.g. Abmessung aufweisen.

Dann wird die dritte Informationsfläche 2''' entlang der Perforation 18h gemäß einem Pfeil C - in Fig. 5 nach unten hin - gefaltet, bis die Unterseite der dritten Informationsfläche 2''' die Unterseite der zweiten Informationsfläche 2'' berührt. Als nächstes wird die zweite Informationsfläche 2'' zusammen mit der dritten Informationsfläche 2''' gemäß einem Pfeil D - in Fig. 5 nach unten hin - gefaltet, bis die Vorderseite der dritten Informationsfläche 2''' die Unterseite der ersten Informationsfläche 2' berührt. Entsprechend werden dann die erste, zweite und dritte Informationsfläche 2', 2'' und 2''' gemeinsam gemäß einem Pfeil E - in Fig. 5 nach unten hin - gefaltet. Die Vorderseite der zweiten Informationsfläche 2'' berührt dann die Unterseite des Mittelabschnitts 5''' des Trägerelements 2. Die übrigen Faltschritte entsprechen den oben in bezug auf die Fig. 1 - 4 beschriebenen.

Wieder in Bezug auf Fig. 2 können bei einem weiteren alternativen Herstellungsverfahren die Sicherheitsdaten erst jetzt in dem Datenbereich 12 des Trägerlements 2 aufgebracht werden, und zwar durch die Ausstanzung 16 der weiteren Schutzfläche 4 hindurch. Erst jetzt wird dann der Datenbereich 12 mit dem selbstklebenden Haftetikett 13 abgedeckt. Das Aufbringen und Abdecken erst nach dem Verkleben und Zusammenfalten ist möglich, weil da die Ausstanzung 16 der weiteren Schutzfläche 4 den Datenbereich 12 des Trägerelements 2 freilegt. Zum Schutz des Datenbereichs kann dann eine Schutzfolie an der weiteren Schutzfläche 4 über der Ausstanzung 16 und dem Datenbereich 12 angebracht werden (nicht dargestellt).

Die in Fig. 3 gezeigte Querschnittansicht der Wertkarte 1 zeigt, daß nach der Herstellung das Trägerelement 2 zwischen der Schutzfläche 3 und der weiteren Schutzfläche 4 liegt, die zusammen einen Schutzumschlag für das Trägerelement 2 bilden. Dabei legt die Ausstanzung 16 den Datenbereich 12 des Trägerelements 2 frei. Bei Benutzung der Wertkarte 1 werden z.B. zunächst die dritte Perforation 18c, die vierte Perforation 18d und die vierte Perforation 18e aufgetrennt. Dann werden z.B. gemäß Fig. 2 die rechte Perforation 18a und die linke Perforation 18b aufgetrennt. Hierdurch wird ein Heraustrennen des Mittelabschnitts 5''' Trägerelements 2 - d.h. dem Trägerelement 2 ohne dessen linken, rechten und oberen Endabschnitt 5', 5'' und 5 - aus dem durch die Schutzfläche 3 und der weiteren Schutzfläche 4 gebildeten Schutzumschlag erreicht. Der Mittelabschnitt 5''' hat, ebenso wie die Mittelabschnitte 6''' und 8''' der Schutzflächen 3 und 4 gem. Fig. 1 ungefähr eine Länge von 9-10 cm, und eine Breite von ca. 5-6 cm. Nach dem Heraustrennen ist der Mittelabschnitt 5''' des Trägerelements 2 von den - weiterhin über den oberen Falz 17b miteinander verbundenen Mittelabschnitten 6''' und 8''' der Schutzflächen 3 und 4 - getrennt. Bei dem Mittelabschnitt 5''' des Trägerelements 2 können jetzt gem. Fig. 4 die Trägerfolie des Haftetiketts 13 zusammen mit der Farbschicht auf der Trägerfolie des Haftetiketts 13 abgerubbelt werden, so daß der Zahlencode 15 erkennbar wird.

## Patentansprüche

1. Datenträger für visuell lesbare Daten, mit:
- einem kartenartigen Trägerelement (2), das wenigstens einen Datenbereich (12) aufweist, auf dem visuell lesbare Daten (15) aufgebracht sind; und
- einer ersten Schutzfläche (3), die eine Seitenfläche des Trägerelements (2) zumindest teilweise abdeckt, wobei die erste Schutzfläche (3) über einen ersten Falz (17a) schwenkbar mit dem Trägerelement (2) gekoppelt ist.

2. Datenträger nach Anspruch 1, gekennzeichnet durch eine zweite Schutzfläche (4), die die andere Seitenfläche des Trägerelements (2) zumindest teilweise abdeckt, wobei die zweite Schutzfläche (4) über einen zweiten Falz (17b) schwenkbar mit der ersten Schutzfläche (3) gekoppelt ist, und wobei zur Bildung eines Schutzumschlags entsprechende, nahe beim ersten Falz (17a) liegende Endabschnitte (5, 8a) der zweiten Schutzfläche (4) und des Trägerelements (2) miteinander verbunden sind.

3. Datenträger nach Anspruch 2, dadurch gekennzeichnet, daß durch übereinander liegende Solltrennstellen (18c,d,e) der ersten Schutzfläche (3), der zweiten Schutzfläche (4) und des Trägerelements (2) das Trägerelement (2) gleichzeitig von der ersten und der zweiten Schutzfläche (3, 4) abtrennbar ist.

4. Datenträger nach einem der vorstehenden Ansprüche, dadurch gekennzeichnet, daß das Trägerelement (2) und die Schutzfläche (3) integral ausgebildet sind.

5. Datenträger gemäß einem der vorstehenden Ansprüche, mit einer auf dem oder jedem Datenbereich (12) angeordneten Abdeckung (13), die - unter Beschädigung oder Zerstörung der Abdeckung (13) - entfernbar ist.

6. Datenträger nach einem der vorstehenden Ansprüche, dadurch gekennzeichnet, daß das Trägerelement (2) und die erste Schutzfläche (3) aus Papier, Pappe und/oder Karton ausgebildet sind.

7. Datenträger nach einem der vorstehenden Ansprüche, dadurch gekennzeichnet, daß die erste Schutzfläche (3) wenigstens einen Datenbereich aufweist, auf dem visuell lesbare Daten aufgebracht sind.

8. Datenträger nach einem der vorstehenden Ansprüche, dadurch gekennzeichnet, daß die Seitenfläche des Trägerelements (2) und die erste Schutzfläche (3) im wesentlichen die gleiche Abmessung haben.

9. Datenträger nach einem der Ansprüche 3 bis 8, dadurch gekennzeichnet, daß die Solltrennstellen (18c,d,e) als Perforation ausgeführt sind.

10. Datenträger nach einem der vorstehenden Ansprüche, dadurch gekennzeichnet, daß die Schutzfläche eine Öffnung aufweist, die den Datenbereich und/oder die Abdeckung des Trägerelements (2) zumindest teilweise freilegt.

11. Datenträger nach einem der vorhergehenden Ansprüche, dadurch gekennzeichnet, daß die erste Schutzfläche (3) und die zweite Schutzfläche (4) eine das Trägerelement (2) umgebende Schutzhülle bilden.

12. Datenträger nach einem der vorhergehenden Ansprüche, dadurch gekennzeichnet, daß die erste Schutzfläche (3) und die zweite Schutzfläche (4) integral ausgebildet sind.

13. Datenträger nach einem der vorstehenden Ansprüche, dadurch gekennzeichnet, daß das Trägerelement (2) auch wenigstens einen Datenbereich umfaßt, auf welchem maschinenlesbare Daten gespeichert sind.

14. Datenträger nach einem der Ansprüche 5 bis 13, dadurch gekennzeichnet, daß die Abdeckung (13) ein ablösbares klebendes oder aufzusiegelndes Etikett ist, welches beim Ablösen zerreißt oder sich irreversibel deformiert.

15. Datenträger nach einem der Ansprüche 5 bis 13, dadurch gekennzeichnet, daß das Etikett aus durchsichtigem Material gefertigt und mit einer abrubbel-, abkratz- und/oder abziehbaren Deckschicht, insbesondere Farbschicht, beschichtet ist.

16. Verfahren zum Herstellen eines Datenträgers (1) für visuell lesbare Daten, insbesondere nach einem der Ansprüche 1 bis 15, mit folgenden Schritten:
- Bereitstellen eines kartenartigen Trägerelements (2);
- Auftragen (Speichern) von visuell lesbaren Daten in wenigstens einem Datenbereich (12) auf dem Trägerelement (2);
- Bereitstellen einer ersten, mit dem Trägerelement (2) gekoppelten Schutzfläche (3); und
- Schwenken der ersten Schutzfläche (3) und/oder des Trägerelements (2) um eine erste Schwenkachse, derart, daß die erste Schutzfläche (3) eine Seitenfläche des Trägerelements zumindest teilweise abdeckt.

17. Verfahren nach Anspruch 16, gekennzeichnet durch:
- Bereitstellen einer mit der ersten Schutzfläche (3) gekoppelten zweiten Schutzfläche (4);
- Schwenken der zweiten Schutzfläche (4) und/oder der ersten Schutzfläche (3) um eine zweite Schwenkachse, derart, daß die zweite Schutzfläche (4) die andere Seitenfläche des Trägerelements (2) zumindest teilweise abdeckt; und
- Verbinden entsprechender, nahe bei der ersten Schwenkachse liegender Endabschnitte (5, 8a) der zweiten Schutzfläche (4) und des Trägerelements (2).

18. Verfahren nach Anspruch 17, dadurch gekennzeichnet, daß das Schwenken der ersten Schutzfläche (3) und/oder des Trägerelements (2) und/oder der zweiten Schutzfläche (4) durch Knicken erreicht wird.

19. Verfahren nach Anspruch 17 oder 18, dadurch gekennzeichnet, daß das Trägerelement (2) und/oder oder die erste Schutzfläche (3) und/oder die zweite Schutzfläche (4) mit einer Solltrennstelle (18c, 18d, 18e), insbesondere einer Perforation, versehen werden.

20. Verfahren nach einem der Ansprüche 16 bis 19, dadurch gekennzeichnet, daß das Trägerelement (2) und die erste Schutzfläche (3) über einen Endlosträger, insbesondere einen Papier-Endlosträger, bereitgestellt werden.

21. Verfahren nach Anspruch 20, dadurch gekennzeichnet, daß zusätzlich auch die zweite Schutzfläche (4) über den Endlosträger bereitgestellt wird.

22. Verfahren nach einem der Ansprüche 16 bis 21, welches außerdem den Schritt aufweist: Abdecken des oder jedes Datenbereiches (12) mit einer Abdeckung (13), die - unter Beschädigung oder Zerstörung der Abdeckung (13) - entfernbar ist.
